# EUROPEAN PATENT APPLICATION

(11) **EP 4 656 048 A1**
(43) Date of publication of application: **03.12.2025**
(21) Application number: 24179036.9
(22) Date of filing: 30.05.2024
(51) Int. Cl.: A01N 63/14, A01P 17/00

(54) **BEE REPELLENT AND MANUFACTURING METHOD AND USE THEREOF**

(71) Applicant: National Changhua University Of Education, Changhua City, Changhua County 500 (TW)
(72) Inventor: LIN, Chung-Chi, 500 Changhua City, Changhua County (TW)
(74) Representative: Viering, Jentschura & Partner mbB Patent- und Rechtsanwälte

(57) **Abstract**

The present invention provides a bee repellent and manufacturing method and use thereof. The manufacturing method of the bee repellent includes following steps: preparing a mixture solution with a sugar and water in a weight ratio of 1.5:1 (S1); adding an effective number of ants into the mixture solution for a soaking time (S2); taking out the ants to obtain a bee repellent (S3). After having the ants soaked therein for a period of time, the bee repellent emits a smell which causes the bees to feel disgusted or generate an avoidance behavior, thereby preventing the bees from accidentally taking the pest controlling bait.

## Description

### BACKGROUND OF THE INVENTION

### 1. Field of the Invention:

The present invention relates to bee repellents, and more particularly, to a bee repellent having ants soaked therein previously to prevent bees from accidentally consuming it and manufacturing method and use thereof.

### 2. Description of the Related Art:

As the most economically valuable pollinators, bees are crucial for maintaining ecological balance and successful crop growth, also one of the key factors in sustainable crop production. Beekeepers are not only facing the threats from parasites, viruses, and various diseases of bees, but also encountering issues with ant infestations. Ants would actively attack worker bee alone on the ground, and sometimes invade beehives to steal honey, causing disturbances to the bee colony or even leading to its collapse.

Currently, sugar bait pesticides are commonly used in the market, mainly targeting mosquitoes and ants. Therefore, there are concerns about bees mistakenly consuming those bait pesticides when they are deployed around beekeeping areas, resulting in harm to bees or honey contamination due to pesticide residues.

The improvement in the conventional sugar bait pesticide is desirable.

### SUMMARY OF THE INVENTION

To improve the issues above, the present invention discloses a bee repellent preventing bees from accidentally consuming it and manufacturing method and use thereof.

For achieving the aforementioned objectives, a manufacturing method of a bee repellent is provided, comprising following steps: preparing a mixture solution with a sugar and water in a weight ratio of 1.5:1; adding an effective number of ants into the mixture solution for a soaking time; taking out the ants to obtain a bee repellent.

In an embodiment, the present invention discloses a bee repellent prepared according to the aforementioned method.

In an embodiment, the present invention discloses a use of said bee repellent in preparing a pest controlling bait.

After having the ants soaked therein for a period of time, the bee repellent of the present invention emits a smell which causes the bees to feel disgusted or generate an avoidance behavior, thereby lowering or destroying the willingness of bees to feed on sugar water. Therefore, the present invention is applicable to pest controlling bait for controlling pests, for example, ants, mosquitoes, or Forcipomyia taiwana which feed on sugar water, so as to improve the issues of bees accidentally consuming pest controlling baits.

### BRIEF DESCRIPTION OF THE DRAWINGS

**Fig. 1** is a flow chart of the manufacturing method of the bee repellent in accordance with an embodiment of the present invention.
**Fig. 2A** is a schematic view illustrating Anoplolepis gracilipes and Dolichoderus thoracicus soaked in the solution and the control group in test 1.
**Fig. 2B** is a schematic view illustrating Anoplolepis gracilipes and Dolichoderus thoracicus soaked in the solution and the control group in test 2.
**Fig. 2C** is a schematic view illustrating Anoplolepis gracilipes and Dolichoderus thoracicus soaked in the solution and the control group in test 3.
**Fig. 2D** is a schematic view illustrating Anoplolepis gracilipes and Dolichoderus thoracicus soaked in the solution and the control group in test 4.
**Fig. 3** is a schematic view illustrating the variation diagram of the feeding rates of bees from tests 1 to 4.

### DETAILED DESCRIPTION OF THE INVENTION

The aforementioned and further advantages and features of the present invention will be understood by reference to the description of the preferred embodiment in conjunction with the accompanying drawings.

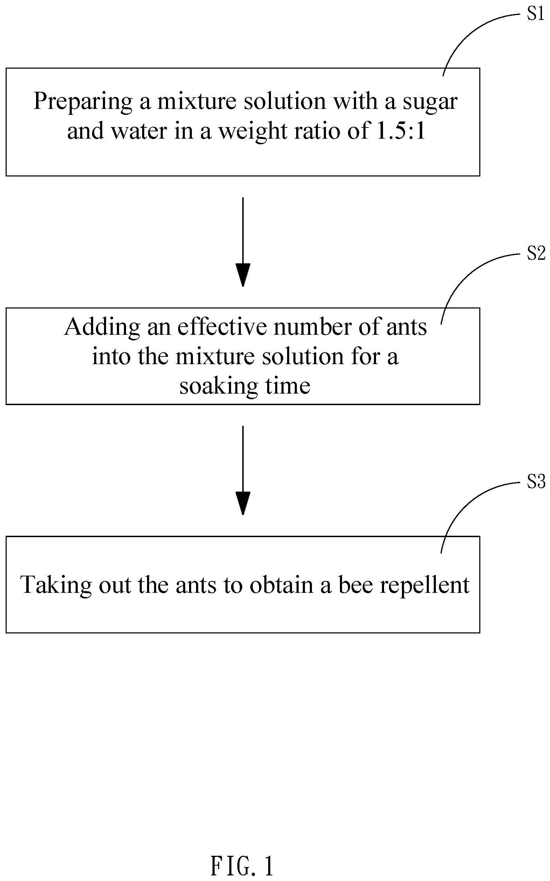

Referring to **Fig. 1** to **Fig. 3****,** the present invention discloses a manufacturing method of a bee repellent, comprising following steps **S1** to **S3.**

In the step **S1,** combining a sugar and a water in a weight ratio of 1.5:1 to form a mixture solution. The sugar is allowed to be fructose, xylitol, sucrose, maltitol, or glucose.

In the step **S2,** an effective number of ants is added into the mixture solution for a soaking time. A ratio between the effective number of the ants and a volume of the mixture solution (ml) ranges from 2.5 to 6.3. The soaking time is at least 72 hours (3 days).

In the step **S3,** the ants are taken out, so as to obtain a bee repellent, which is allowed to be used to prepare a pest controlling bait.

Therein, the ration between the effective number of the ants and the volume of the mixture solution is allowed to be 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, or 6.3.

Therein, the soaking time is allowed to be 3 days, 4 days, 5 days, 6 days, 7 days, 8 days, 9 days, 10 days, 11 days, 12 days, 13 days, 14 days, 15 days, 16 days, 17 days, 18 days, 19 days, 20 days, 21 days, 22 days, 23 days, 24 days, 25 days, 26 days, 27 days, 28 days, 29 days, or 30 days.

Therein, the ants are allowed to be one of Anoplolepis gracilipes or Dolichoderus thoracicus, or combination thereof.

Steps for test in accordance with the embodiment is described as follows.

The sucrose and water is mixed in the weight ratio of 1.5:1 to form a sucrose solution having a concentration of 150%wt/wt. Then, different numbers or types of the ants are added thereinto. Information on the ratio between the number of ants and the volume of solution is shown as Table 1 below. After the ants have been soaked in the solution for at least 3 days, the sucrose solution used for soaking the ants is tested to see if it is capable of repelling bees and to check the effective concentration range thereof.

In each test, three different types of sucrose solutions are individually poured into interconnected boxes (approximately 10ml). The different types of solutions are separated by a distance of one box, and the boxes are placed in front of the entrance of a beehive. The bees used for testing the avoidance behavior are Apis mellifera.

After the food is placed, a number of bees feeding on each type of the sucrose solutions is observed and recorded every two minutes, with a total observation time of 10 minutes. Each test is repeated at least four times, and the relative positions of the various types of the sucrose solutions are switched for each repetition.

After the tests, an average number of bees for each type of the sucrose solutions in each test is calculated. A one-way analysis of variance (ANOVA) is performed, followed by a Tukey's HSD test for the post-hoc test, so as to investigate if there are differences among the various types of sucrose solutions in feeding preferences of bees.

### Test results:

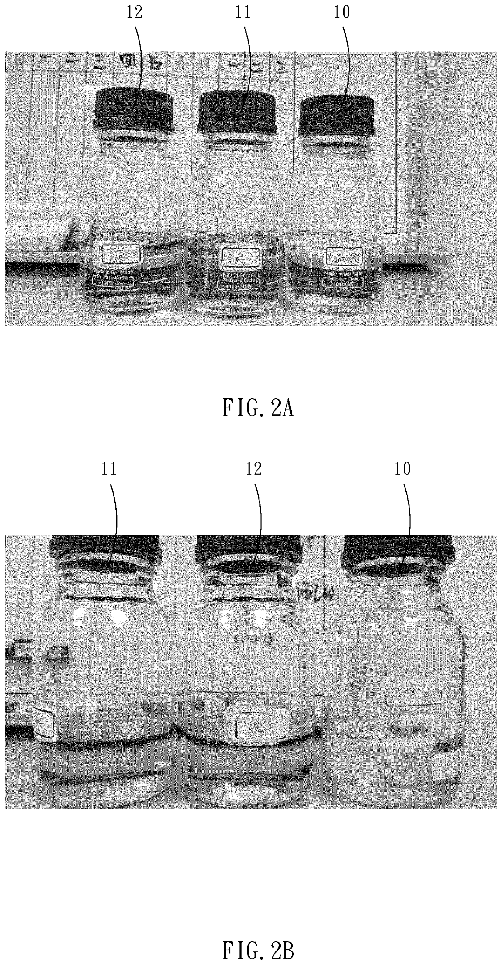

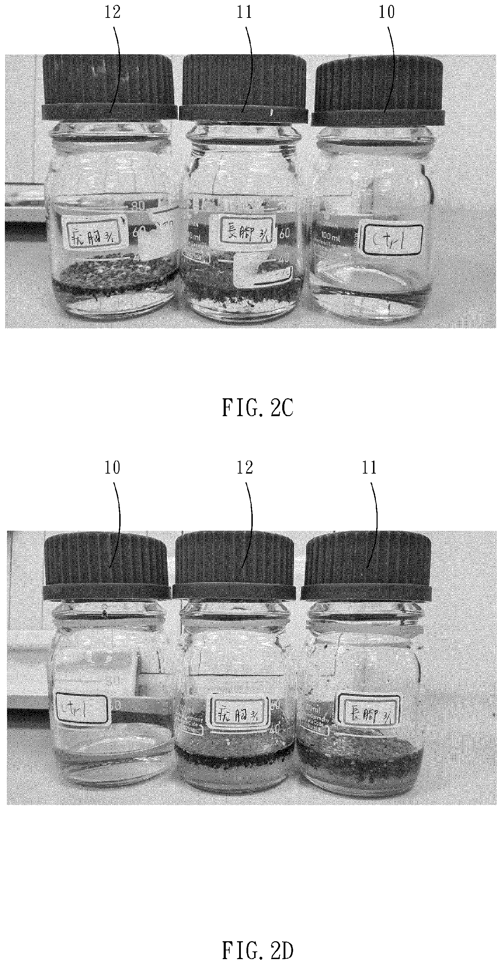

**Fig. 2A** represents test 1, **Fig. 2B** represents test 2, **Fig. 2C** represents test 3, and **Fig. 2D** represents test 4. Each of the tests includes a control group **10,** an Anoplolepis gracilipes group **11,** and a Dolichoderus thoracicus group **12.** The positions of the groups **10, 11, 12** in each test are not exactly the same.

Table 1 below shows the ratio between the number of ants and the volume of solution and the days of soaking.

**Table 1**

| | Test Species | Ants number | Sucrose volume (ml)* | Number volume ratio | Soaking days |
|---|---|---|---|---|---|
| Test 1 | Anoplolepis gracilipes, Dolichoderus thoracicus | 300, 300 | 120 | 2.5 | 4 days |
| Test 2 | Anoplolepis gracilipes, Dolichoderus thoracicus | 500, 500 | 80 | 6.3 | 28 days |
| Test 3 | Anoplolepis gracilipes, Dolichoderus thoracicus | 400, 400 | 15 | 26.7 | 10 days |
| Test 4 | Anoplolepis gracilipes, Dolichoderus thoracicus | 600, 600 | 18 | 33.3 | 10 days |

| | | | | | |
|---|---|---|---|---|---|
| *Weight ratio between sucrose and water is 1.5:1. | | | | | |

Table 2 below shows the number of bees feeding on each type of the sucrose solutions.

**Table 2**

| | Pure sucrose solution (control group 10) | Sucrose solution previously soaked with Anoplolepis gracilipes^{a} (Anoplolepis gracilipes group 11) | Sucrose solution previously soaked with Dolichoderus thoracicus^{a} (Dolichoderus thoracicus group 12) |
|---|---|---|---|
| Test 1 | 2.6 ± 0.5a | 2.9 ± 0.7a | 2.3 ± 0.5a |
| Test 2 | 3.2 ± 0.4a | 3.6 ± 0.4a | 3.1 ± 0.5a |
| Test 3 | 2.2 ± 0.4a | 1.5 ± 0.2a | 1.3 ± 0.3a |
| Test 4 | 2.7 ± 0.4b | 0.6 ± 0.2a | 0.8 ± 0.2a |

The values are presented as the mean ± standard error. Different letters within the same row indicate significant differences between the means (Tukey's HSD test, p < 0.05).

^{a}Information on the ratio between the number of ants and the volume of solution for each test is allowed to be referred to Table 1.

From Table 1, the test results of sucrose solutions using different type of ants (Anoplolepis gracilipes and Dolichoderus thoracicus) and ratios (number of ants and volume of solution) are shown.

From Table 2, it is clear that the present invention is obviously capable of repelling bees (existing statistically significant difference compared with the control group 10 using pure sucrose).

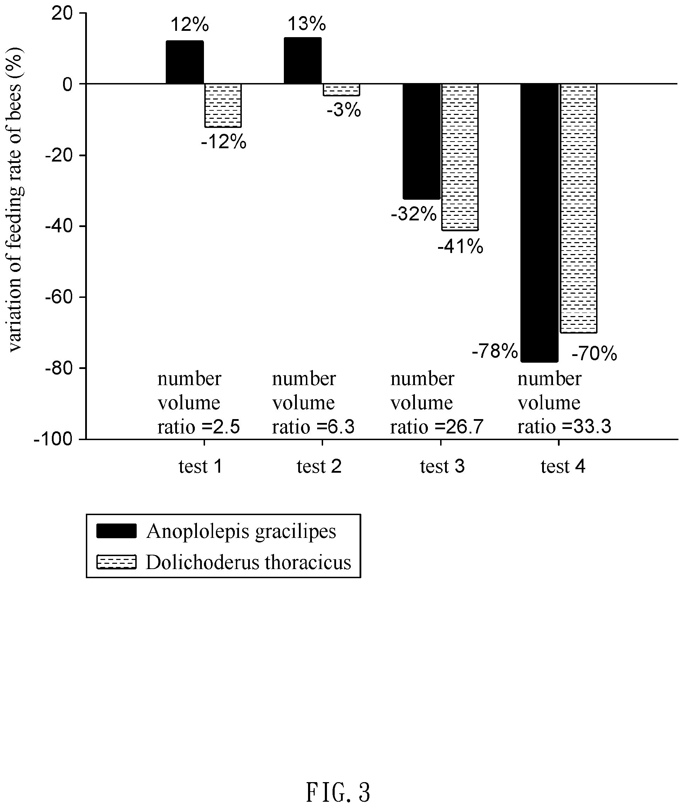

Referring to Fig. 3 and Table 2, the results of test 1 to test 4 show that when the number and volume ratio is smaller than 30, the repelling effect of the solution using Dolichoderus thoracicus is slightly greater than that of the solution using Anoplolepis gracilipes. Referring to test 4, it is clear that when the number and volume ratio is larger than 30, the repelling effect of the solution using Anoplolepis gracilipes is slightly greater than that of the solution using Dolichoderus thoracicus. Because bees would avoid the sucrose solutions using both types of ant, whether the number and volume ratio or the soaking days of both solutions using Dolichoderus thoracicus or Anoplolepis gracilipes increases, the avoidance of bees would accordingly increase as well.

Besides, in test 4 with the number and volume ratio of 33.3 and 10 soaking days, the feeding rates of bees reduced by 78% (Anoplolepis gracilipes) and 70% (Dolichoderus thoracicus), respectively. Therefore, it is clear that the composition of test 4 is the optimal formula, as it reduces the feeding rate of bees by over 70%.

With the foregoing configuration, the present invention achieves following advantages.

The present invention effectively repels bees. The bee repellent produced through the soaking of ants in sugar water takes the ecology and conservation of bees into consideration. It effectively repels bees, significantly reduces the willingness of bees to feed on sugar water, and prevents bees from mistakenly ingesting it. While protecting crops, the present invention also ensures the safety of bees, minimizes interference on bees, avoids adverse effects on bees, and preserves the habitats of bees.

The present invention is environmentally friendly. The bee repellent of the present invention is prepared with ants and sugar water, containing no harmful chemicals, so as to be environmentally friendly and reduce adverse effects on the ecosystem.

The material cost is low. Both ants and sugar water are common and inexpensive materials, which are easy to obtain and prepare.

Although particular embodiments of the invention have been described in detail for purposes of illustration, various modifications and enhancements may be made without departing from the scope of the invention. Accordingly, the invention is not to be limited except as by the appended claims.

## Claims

1. A manufacturing method of bee repellent, comprising following steps:
A, preparing a mixture solution with a sugar and a water in a weight ratio of 1.5:1 (S1);
B, adding an effective number of ants into the mixture solution for a soaking time (S2); and
C, taking out the ants to obtain a bee repellent (S3).

2. The manufacturing method of claim 1, wherein a ratio between the effective number of the ants and a volume of the mixture solution (ml) ranges from 2.5 to 6.3.

3. The manufacturing method of claim 1, wherein the soaking time is at least 72 hours.

4. The manufacturing method of claim 1, wherein the sugar is selected from a group consisting of fructose, xylitol, sucrose, maltitol, and glucose.

5. The manufacturing method of claim 1, wherein the ants are selected from a group consisting of Anoplolepis gracilipes, Dolichoderus thoracicus, and a combination thereof.

6. A bee repellent prepared according to the manufacturing method selected from claims 1 to 5.

7. A use of the bee repellent of claim 6, wherein the bee repellent is used to prepare pest controlling bait.
